# EUROPÄISCHE PATENTANMELDUNG

(11) **EP 4 527 545 A1**
(43) Veröffentlichungstag der Anmeldung: **26.03.2025**
(21) Anmeldenummer: 24198803.9
(22) Anmeldetag: 06.09.2024
(51) Int. Cl.: B23P 19/06, B25J 15/00

(54) **MODUL ZUM AUTOMATISIERTEN GREIFEN EINES BAUTEILS**

(30) Priorität: 19.09.2023 DE 102023125290
(71) Anmelder: Liebherr-Verzahntechnik GmbH, 87437 Kempten (DE)
(72) Erfinder: Pollmann, Jan, 87439 Kempten (DE); Hößle, Florian, 87527 Sonthofen (DE); Hiemer, Lukas, 87452 Altusried (DE)
(74) Vertreter: Behr, Wolfgang

(57) **Zusammenfassung**

Die vorliegende Erfindung umfasst ein Modul zum automatisierten Greifen eines mit mindestens einer Schraube verschraubten Bauteils, insbesondere bei der Demontage einer Batterieeinheit, umfassend:
- eine Schnittstelle zur Montage des Moduls an einer Handlingeinheit, insbesondere einem Roboter, und
- einen Greifer zum Greifen des Bauteils.

Es ist dadurch gekennzeichnet, dass das Modul eine Maske zur Sicherung der mindestens einen Schraube während und/oder nach dem Lösen der Verschraubung umfasst, wobei die Maske bevorzugt eine Aussparung umfasst, durch welche hindurch die Schraube mittels eines Schraubers erreichbar ist, um die Verschraubung zu lösen.

## Beschreibung

Die vorliegende Erfindung betrifft ein Modul zum automatisierten Greifen eines Bauteils, welches mit mindestens einer Schraube verschraubt ist.

Insbesondere dann, wenn ein verschraubtes Bauteil demontiert werden soll, ergeben sich besondere Anforderungen an die Handhabung des Bauteils und der Schrauben. Bisher erfolgte die Demontage solcher Bauteile daher üblicherweise händisch.

Insbesondere bei der Demontage einer Batterieeinheit existieren jedoch häufig eine Mehrzahl von verschraubten Bauteilen. Die händische Demontage solcher Bauteile ist daher mit einem hohen Aufwand verbunden. Beispielsweise kann es sich bei diesen Bauteilen um elektrische Leiter, mit welchen die einzelnen Batteriemodule einer Batterieeinheit elektrisch verbunden sind und welche mit den Anschlüssen an den Batteriemodulen verschraubt sind, handeln.

Aufgabe der vorliegenden Erfindung ist es daher, ein Modul zum automatisierten Greifen eines mindestens mit einer Schraube verschraubten Bauteils zur Verfügung zu stellen, welches eine vereinfachte Demontage solcher Bauteile ermöglicht.

Diese Aufgabe wird durch ein Modul gemäß Anspruch 1 gelöst. Bevorzugte Ausgestaltungen der vorliegenden Erfindung sind Gegenstand der Unteransprüche.

Die vorliegende Erfindung umfasst ein Modul zum automatisierten Greifen eines mit mindestens einer Schraube verschraubten Bauteils, insbesondere bei der Demontage einer Batterieeinheit, umfassend eine Schnittstelle zur Montage des Moduls an einer Handlingeinheit, insbesondere einem Roboter, und einen Greifer zum Greifen des Bauteils. Erfindungsgemäß umfasst das Modul eine Maske zur Sicherung der mindestens einen Schraube während und/oder nach dem Lösen der Verschraubung.

Die Maske sichert daher die Schraube während und/oder nach dem Lösen der Verschraubung am Bauteil und verhindert, dass diese sich ungewollt von dem Bauteil trennt. Hierdurch kann das Bauteil sicher demontiert werden.

Gemäß einer möglichen Ausgestaltung der vorliegenden Erfindung ist die Maske aus einem elektrisch isolierenden Material gefertigt, insbesondere aus Kunststoff. Hierdurch kann sie auch im Hochvolt-Bereich eingesetzt werden.

Gemäß einer möglichen Ausgestaltung der vorliegenden Erfindung ist der Bit des Schraubers elektrisch von dem Schrauber isoliert an diesem angeordnet, insbesondere über ein keramisches Inlay.

Durch die elektrische Isolierung kann das erfindungsgemäße Modul insbesondere auch zum Handhaben von Bauteilen, welche im Hochvolt-Bereich eingesetzt werden, eingesetzt werden, beispielsweise zum Handhaben von elektrischen Verbindern von Batteriemodulen.

Gemäß einer möglichen Ausgestaltung der vorliegenden Erfindung umfasst die Maske eine Aussparung, durch welche hindurch die Schraube mittels eines Schraubers erreichbar ist, um die Verschraubung zu lösen. Insbesondere kann es sich bei der Aussparung um eine Öffnung handeln, welche durch die Maske hindurch geht.

Gemäß einer möglichen Ausgestaltung der vorliegenden Erfindung ist die Maske aus einer Freigabestellung, in welcher die Schraube von dem Bauteil entfernt werden kann, in eine Haltestellung, in welcher die Maske die Schraube am Bauteil sichert, bewegbar. Bevorzugt umfasst das Modul einen Aktor zum Bewegen der Maske. Die Bewegbarkeit der Maske ermöglicht ein gezieltes Abwerfen der gelösten Schraube.

Gemäß einer möglichen Ausgestaltung der vorliegenden Erfindung ist die Maske um eine Schwenkachse verschwenkbar und/oder linear verfahrbar am Modul angeordnet und durch ein Verschwenken um die Schwenkachse und/oder lineares Verfahren von der Freigabestellung in die Haltestellung bewegbar. Insbesondere kann die Maske hierbei auf den Kopf der Schraube bewegt werden.

Gemäß einer möglichen Ausgestaltung der vorliegenden Erfindung umfasst der Greifer zwei Greifelemente, zwischen welchen das Bauteil gegriffen werden kann. Durch das Greifen des Bauteils kann dieses, ist die Verschraubung gelöst, an einen anderen Platz transportiert werden.

Gemäß einer möglichen Ausgestaltung der vorliegenden Erfindung sind die beiden Greifelemente beide beweglich am Modul angeordnet. Hierdurch ist eine einfachere Handhabung insbesondere bei beengten Platzverhältnissen gegeben.

Gemäß einer möglichen Ausgestaltung der vorliegenden Erfindung sind die beiden Greifelemente durch separate Aktoren bewegbar. Hierbei kann eine Steuerung vorgesehen sein, welche die beiden Aktoren nacheinander betätigt, um durch zwei aufeinander folgende Bewegungen des ersten und des zweiten Greifelementes das Bauteil zu greifen.

Gemäß einer möglichen Ausgestaltung der vorliegenden Erfindung weisen die beiden Greifelemente unterschiedliche Bewegungsachsen und/oder Bewegungsrichtungen auf. Hierdurch können die beiden Greifelemente unterschiedliche Funktionen übernehmen.

In einer möglichen Ausgestaltung erfolgt das Greifen über nur einen Greifaktor. Hierbei kann die Steuerung so ausgestaltet sein, dass der Geifer über die Handlingeinheit so verfahren wird, dass ein erstes Greifelement des Greifers, insbesondere ein erster Greiffinger des Greifers, unter eine zu greifende Kontur des Bauteils verfahren wird, und ein zweites Greifelement, insbesondere ein zweiter Greiffinger, über die zu greifende Kontur des Bauteils verfahren wird. Daraufhin wird der eine Greifaktor angesteuert, um das Bauteil zwischen den Greifelementen zu greifen.

Sind dagegen zwei Greifaktoren vorgesehen, kann zumindest einer der beiden Aktoren dazu genutzt werden, um ein erstes Greifelement des Greifers, insbesondere ein erster Greiffinger des Greifers, unter eine zu greifende Kontur des Bauteils zu verfahren. Hierbei kann die Steuerung so ausgestaltet sein, dass der Geifer zuvor über die Handlingeinheit so verfahren wird, dass ein zweites Greifelement, insbesondere ein zweiter Greiffinger, über die zu greifende Kontur des Bauteils verfahren wurde. Daraufhin wird einer oder werden beide Greifaktoren angesteuert, um das Bauteil zwischen den Greifelementen zu greifen.

Alternativ oder zusätzlich kann bei der Verwendung von zwei Greifaktoren mindestens einer der beiden Greifaktoren angesteuert werden, um den Greifer an die Dicke der zu greifenden Kontur anzupassen.

Gemäß einer möglichen Ausgestaltung der vorliegenden Erfindung ist vorgesehen, dass ein erstes Greifelement mittels eines ersten Greifaktors des Moduls aus einer Greifposition, in welcher eine Greifkontur des ersten Greifelementes einer Greifkontur des zweiten Greifelementes gegenüberliegt, um eine zwischen den beiden Greifelementen angeordnete Kontur des Bauteils greifen zu können, in eine Freigabeposition bewegbar ist, in welcher sich die Greifkonturen nicht mehr gegenüber liegen. Das erste Greifelement kann daher zum einen genutzt werden, um die beiden Greifelemente in eine Stellung zu bringen, in welcher das Bauteil gegriffen werden kann, und/oder dazu, um das Bauteil freizugeben, wenn dieses abgeworfen werden soll.

Gemäß einer möglichen Ausgestaltung der vorliegenden Erfindung ist vorgesehen, dass das erste Greifelement aus einer Greifposition in eine Freigabeposition verfahrbar, insbesondere verschwenkbar und/oder linear verfahrbar ist. Das Verschwenken erlaubt eine besonders einfache konstruktive Gestaltung. Insbesondere kann es sich bei der Greifposition und der Freigabeposition dabei um jene Positionen handeln, welche bereits beschrieben wurden.

Gemäß einer möglichen Ausgestaltung der vorliegenden Erfindung handelt es sich bei dem ersten Greifelement um einen Greiffinger, welcher unter die Kontur des Bauteils bewegbar ist. Insbesondere erlaubt der Greiffinger einen Untergriff.

Gemäß einer möglichen Ausgestaltung der vorliegenden Erfindung ist vorgesehen, dass eine Greifkontur des zweiten Greifelements mittels eines zweiten Greifaktors des Moduls in Richtung auf eine Greifkontur des ersten Greifelementes verfahrbar ist, um eine dazwischen angeordnete Kontur des Moduls zu greifen. Insbesondere kann das eigentliche Greifen des Bauteils und/oder ein Klemmen des Bauteils zwischen den Greifelementen daher durch die Bewegung des zweiten Greifelementes vorgenommen werden, während das erste Greifelement hierbei stationär ist.

Gemäß einer möglichen Ausgestaltung der vorliegenden Erfindung ist das zweite Greifelement linear verfahrbar. Insbesondere ist es hierbei in Schließrichtung auf das andere Greifelement zu verfahrbar.

Gemäß einer alternativen Ausgestaltung der vorliegenden Erfindung ist auch das zweite Greifelement verschwenkbar an dem Modul angeordnet, wobei das zweite Greifelement bevorzugt mit einem Schwenkradius verschwenkbar ist, welcher mindestens doppelt so groß ist wie ein Schwenkradius des ersten Greifelementes. Durch den großen Schwenkradius wird eine an eine lineare Bewegung angenäherte Schließbewegung erzeugt.

Gemäß einer möglichen Ausgestaltung der vorliegenden Erfindung ist vorgesehen, dass der Greifer einen Sensor umfasst, mit welchem die Greifbewegung überwacht werden kann.

Gemäß einer möglichen Ausgestaltung der vorliegenden Erfindung ist weiterhin eine Steuerung vorgesehen, welche anhand der Überwachung der Greifbewegung erkennt, ob ein Bauteil gegriffen wurde und/oder welche Art von Bauteil gegriffen wurde.

Gemäß einer möglichen Ausgestaltung der vorliegenden Erfindung ist vorgesehen, dass der Sensor den Verfahrweg mindestens eines Greifelements des Greifers überwacht, insbesondere den Verfahrweg des zweiten Greifelementes.

Gemäß einer möglichen Ausgestaltung der vorliegenden Erfindung ist vorgesehen, dass die Maske zwei Maskenelemente umfasst, welche auf beiden Seiten des Greifers angeordnet sind.

Gemäß einer möglichen Ausgestaltung der vorliegenden Erfindung ist vorgesehen, dass die Maskenelemente an einem schwenkbaren Maskenarm angeordnet sind.

Die vorliegende Erfindung umfasst weiterhin ein System zum automatisierten Greifen eines mit mindestens einer Schraube verschraubten Bauteils, insbesondere bei der Demontage einer Batterieeinheit, mit einem Modul, wie es oben beschrieben wurde, einer Handlingeinheit, insbesondere einem Roboter, zum Bewegen des Moduls und einer Steuerung zur Ansteuerung der Handlingeinheit, und des Moduls.

Gemäß einer möglichen Ausgestaltung der vorliegenden Erfindung umfasst das System einen Schrauber zum Lösen der mindestens einen Schraube, während diese von der Maske niedergehalten wird.

Gemäß einer möglichen Ausgestaltung der vorliegenden Erfindung ist der Schrauber an einer weiteren Handlingeinheit, insbesondere einem weiteren Roboter, angeordnet.

Gemäß einer möglichen Ausgestaltung der vorliegenden Erfindung ist die Steuerung so ausgestaltet, dass nach einem Lösen der mindestens einen Schraube das Bauteil in eine erste Abwurfposition verfahren wird, wobei bei dem Verfahren die mindestens eine Schraube mittels der Maske am Bauteil gesichert ist, und dass die Maske in der Abwurfposition in eine Freigabestellung bewegt wird, in welcher sie die mindestens eine Schraube freigibt.

Gemäß einer möglichen Ausgestaltung der vorliegenden Erfindung wird die mindestens eine Schraube durch ein mittels der Handlingeinheit erfolgendes Bewegen, beispielsweise Drehen und/oder Kippen des Moduls abgeworfen, insbesondere in eine erste Abwurfbox. Dies erlaubt ein sortenreines recyclen der Schrauben.

Gemäß einer möglichen Ausgestaltung der vorliegenden Erfindung ist die Steuerung so ausgestaltet, dass das Bauteil in eine zweite Abwurfposition verfahren wird, in welcher der Greifer das Bauteil freigibt, so dass dieses abgeworfen wird, insbesondere in eine zweite Abwurfbox. Dies erlaubt ein sortenreines recyclen des Bauteils.

Gemäß einer möglichen Ausgestaltung der vorliegenden Erfindung erfolgt das Abwerfen des Bauteils, nachdem die Schrauben abgeworfen wurden.

Gemäß einer möglichen Ausgestaltung der vorliegenden Erfindung ist ein erstes Greifelement des Greifers so verfahrbar und insbesondere zurückschwenkbar, dass das Bauteil ohne eine Bewegung des Moduls durch den Roboter abgeworfen wird.

Gemäß einer möglichen Ausgestaltung der vorliegenden Erfindung ist die Steuerung so ausgestaltet, dass zum Greifen des Bauteils das Modul mittels des Roboters in eine Arbeitsposition am Bauteil verfahren wird.

Gemäß einer möglichen Ausgestaltung der vorliegenden Erfindung wird in der Arbeitsposition des Moduls ein erstes Greifelement des Greifers aus einer Freigabeposition in eine Greifposition verfahren, insbesondere verschwenkt und/oder linear verfahren, in welcher eine Greifkontur des ersten Greifelementes einer Greifkontur des zweiten Greifelementes gegenüberliegt, um eine zwischen den beiden Greifelementen angeordnete Kontur des Bauteils greifen zu können.

Gemäß einer möglichen Ausgestaltung der vorliegenden Erfindung erfolgt das Greifen durch ein Bewegen eines zweiten Greifelementes.

Gemäß einer möglichen Ausgestaltung der vorliegenden Erfindung wird in der Arbeitsposition des Moduls die Maske aus einer Freigabestellung in eine Haltestellung bewegt, insbesondere verschwenkt und/oder linear verfahren.

Gemäß einer möglichen Ausgestaltung der vorliegenden Erfindung handelt es sich bei der Handlingeinheit um einen Roboter, insbesondere um einen Roboter mit einem Roboteram mit mehreren rotatorischen Achsen. Beispielsweise kann es sich um einen Industrieroboter mit mindestens 6 Achsen handeln.

Gemäß einer möglichen Ausgestaltung der vorliegenden Erfindung ist die Steuerung so ausgestaltet, dass sie die Handlingeinheit und das Modul so ansteuert, dass diese die oben und im folgenden beschriebenen Funktionen und/oder Schritte durchführen. Insbesondere kann die Steuerung so ausgestaltet sein, dass die Handlingeinheit und das Modul die Funktionen und/oder Schritte automatisiert durchführen.

Gemäß einer möglichen Ausgestaltung der vorliegenden Erfindung umfasst die oben oder im folgenden beschriebene Steuerung oder Steuerungen einen Mikroprozessor und einen nicht-flüchtigen Speicher, auf welchem ein Computerprogramm abgespeichert ist, welches beim Ablaufen auf dem Mikroprozessor die oben sowie im folgenden beschriebenen Funktionen und/oder Schritte durchführt. Die Steuerung und insbesondere der Mikroprozessor steht bevorzugt mit den Aktoren und/oder Sensoren des Moduls und/oder der Handlingeinheit in einer Steuer- und/oder Signalverbindung und steuert die Aktoren an und/oder wertet die Signale der Sensoren aus.

Die vorliegende Erfindung umfasst weiterhin ein Verfahren zum automatisierten Greifen eines mit mindestens einer Schraube verschraubten Bauteils, insbesondere bei der Demontage einer Batterieeinheit, mit einem Modul und/oder einem System, wie sie oben beschrieben wurden, wobei die mindestens eine Schraube mittels eines Schraubers gelöst wird, welcher durch die Maske hindurch an der Schraube angreift, während diese durch die Maske am Bauteil gesichert ist. Hierdurch ergeben sich die gleichen Vorteile, welche bereits oben im Hinblick auf das Modul und das System beschrieben wurden.

Bevorzugt wird das Verfahren dabei so durchgeführt, wie dies oben und im folgenden im Hinblick auf das Modul und das System bereits beschrieben wurde und noch beschrieben wird.

Die vorliegende Erfindung wird nun anhand eines Ausführungsbeispiels sowie Zeichnungen näher beschrieben.

Dabei zeigen:
- Fig. 1:: ein Ausführungsbeispiel des erfindungsgemäßen Moduls in einer perspektivischen Ansicht,
- Fig. 2:: eine Detailansicht des Greifers und der Maske bei dem in Fig. 1 gezeigten Ausführungsbeispiel,
- Fig. 3:: eine weitere Detailansicht von schräg unten,
- Fig. 4:: eine Seitenansicht des Moduls und
- Fig. 5:: den Einsatz des Moduls zum Greifen eines Bauteils.

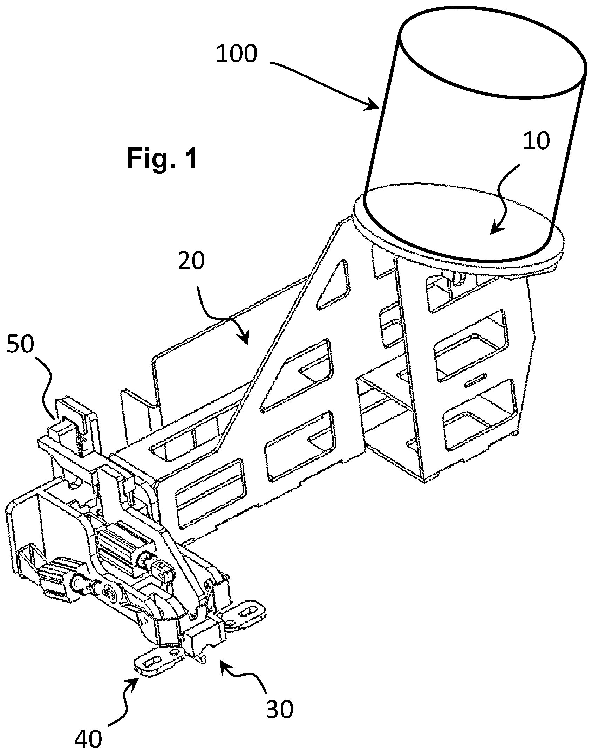

Fig. 1 zeigt ein Ausführungsbeispiel eines erfindungsgemäßen Moduls, welches über die Schnittstelle 10 an der lediglich schematisch dargestellten Handlingeinheit 100 angeordnet ist. Bei der Handlingeinheit 100 kann es sich insbesondere um einen Roboter handeln. Insbesondere kann das Modul hierbei über die Schnittstelle 10 mit dem Endglied des Roboterarms des Roboters verbunden sein.

Der Greifer 30 zum Greifen des Bauteils steht dabei über ein Verbindungselement 20 in Form einer Konsole mit der Schnittstelle in Verbindung. Im Ausführungsbeispiel ist das Verbindungselement 20 so ausgeführt, dass der Greifer 30 versetzt zur Achse der Schnittstelle beziehungsweise der Achse des Endgliedes der Handlingeinheit, an welcher die Schnittstelle befestigt ist, angeordnet ist. Weiterhin ist die Bewegungsachse des Greifelementes 30, welche durch die Schließbewegung des Greifers definiert ist, schräg zu dieser Achse angeordnet. Hierdurch ist ein Greifen des Bauteils auch bei beengten Platzsituationen möglich. Alternative Ausgestaltungen des Verbindungselementes 20 sind jedoch ebenfalls denkbar.

Neben dem Greifer 30 zum Greifen des Bauteils umfasst das Modul weiterhin eine Maske zur Sicherung mindestens einer Schraube, mit welcher das Bauteil verschraubt ist, am Bauteil. Insbesondere sichert die Maske hierbei die Schraube am Bauteil, während oder nachdem die Verschraubung gelöst wurde.

Das Modul umfasst im Ausführungsbeispiel weiterhin einen Sensor 50, über welchen der Greifvorgang durch den Greifer 30 überwacht wird.

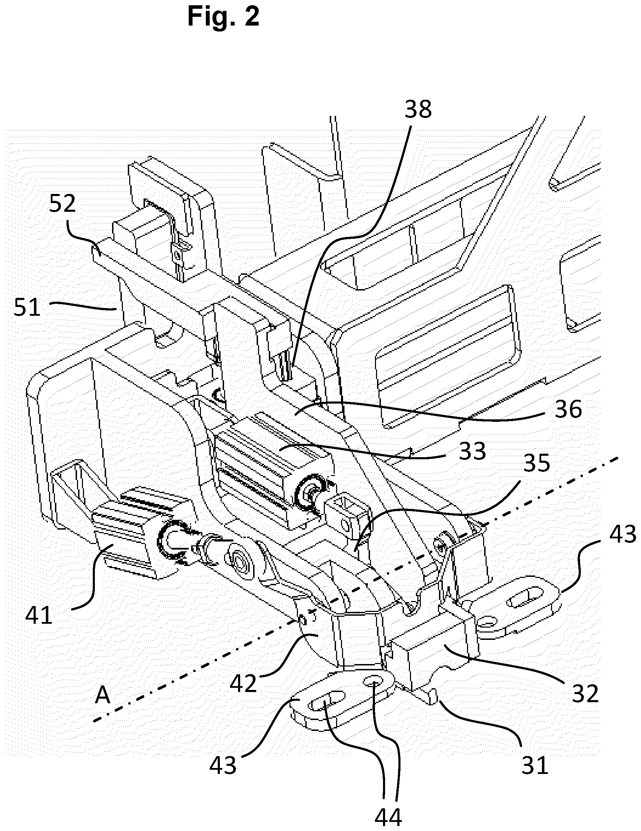

Die nähere Ausgestaltung des Moduls wird nun anhand der Detailzeichnungen in Figuren 2 - 4 näher beschrieben.

Wie aus Fig. 2 ersichtlich umfasst die Maske 40 mindestens ein Maskenelement 43, welches die mindestens eine Schraube beim Lösen der Verschraubung sichert. Hierfür umfasst die Maske mindestens einen Durchbruch in Form einer Öffnung 44, durch welche hindurch ein Bit eines Schraubers durch die Maske hindurch die Schraube erreicht, um die Verschraubung zu lösen. Bei der Öffnung handelt es sich im Ausführungsbeispiel um eine Bohrung bzw. ein Langloch, d.h. die Öffnung ist von dem Material der Maske umgeben. In einer alternativen Ausgestaltung wäre auch eine Aussparung in der Maske denkbar, welche zu einer hin offen ist, beispielsweise in Form eines von einer Seite in die Maske hineinreichenden Kanals.

Im Ausführungsbeispiel umfasst die Maske zwei Maskenelemente 43, wobei die Maskenelemente jeweils mehrere Öffnungen 44 umfassen. Die Ausgestaltung der Maske beziehungsweise der Maskenelemente und die Anzahl der Öffnungen hängt hierbei von der Ausgestaltung des Bauteils und der Position und Anzahl der Schrauben ab.

Die Maske ist aus der Haltestellung, welche in Fig. 2 gezeigt ist, in eine Freigabestellung bewegbar, in welcher die Schrauben nicht mehr gesichert sind, sondern von dem Bauteil entfernt werden können.

Im Ausführungsbeispiel sind die Maskenelemente 43 hierfür an einem Schwenkarm 42 angeordnet, welcher um die Schwenkachse A verschwenkbar ist. Zum Bewegen der Maske ist ein Aktor 41 vorgesehen, welcher im Ausführungsbeispiel an dem Schwenkarm 42 angreift. Aus der in Fig. 2 gezeigten Haltestellung kann die Maske nach oben in die Freigabestellung von dem Bauteil weggeschwenkt werden.

In einer alternativen Ausgestaltung könnten die Maskenelemente 43 auch linear verfahrbar am Greifer angeordnet werden und beispielsweise in einer Ebene, welche senkrecht auf der Achse des Schraubers steht, über die Schrauben verfahren werden.

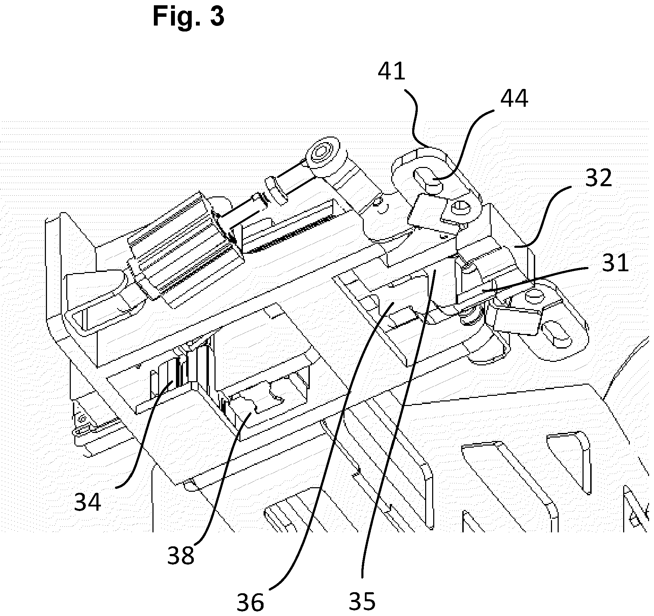

Wie in Figuren 2 - 4 ersichtlich umfasst der Greifer zwei Greifelemente 31 und 32, welche jeweils separat über Aktoren 33 beziehungsweise 34 bewegbar sind. Das erste Greifelement 31 ist an einem Schwenkarm 35 angeordnet, welcher über den Aktor 33 bewegt wird. Das zweite Greifelement 32 ist dagegen über den in Fig. 3 gezeigten Aktor 34 entlang einer Linearführung 38 linear verfahrbar. Hierfür ist das zweite Greifelement 32 an der Halterung 36 angeordnet, welche wiederum über die Linearführung 38 linear verfahren werden kann.

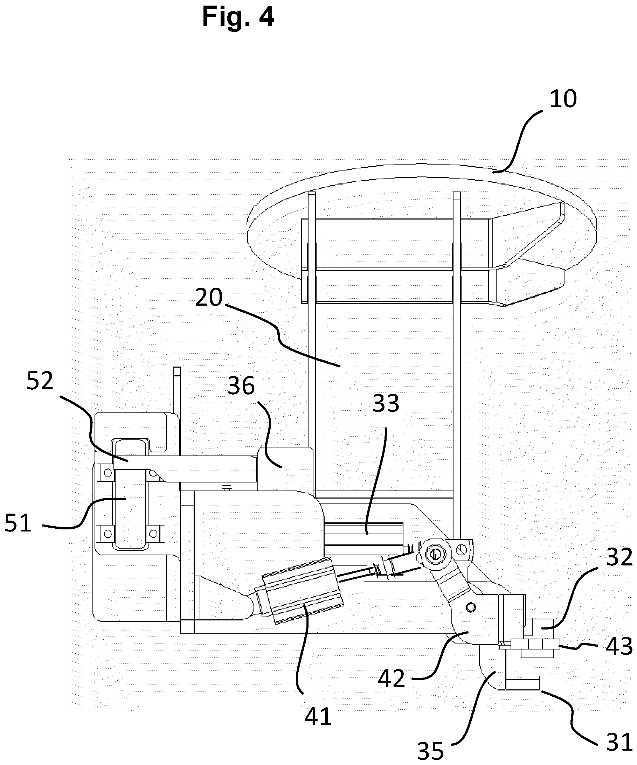

Bei dem ersten Greifelement 31 handelt es sich im Ausführungsbeispiel um einen Greiffinger, welcher durch den Schwenkarm 35 in die beispielsweise in Fig. 4 ersichtliche Greifposition geschwenkt werden kann, in welcher die Greifkontur des Greiffingers 31 einer Greifkontur des zweiten Greifelementes 32 gegenüberliegt, so dass ein zwischen den beiden Greifkonturen angeordneter Bereich des Bauteils gegriffen werden kann. Durch Zurückschwenken des Schwenkarms 35 kann das erste Greifelement dagegen aus dieser Position in eine Freigabeposition bewegt werden, durch welche das Bauteil freigegeben wird. Das erste Greifelement 31 ermöglicht dabei einen Untergriff unter eine Kontur des Bauteils oder in eine Öffnung des Bauteils. Ist das erste Greifelement 31 in der Greifposition, wird das Bauteil durch Verfahren des zweiten Greifelementes 32 zwischen den Greifkonturen der beiden Greifelemente gegriffen und damit zwischen diesen gehalten.

Die Greifkontur des zweiten Greifelementes ist bevorzugt an die Form des Bauteils angepasst und/oder umfasst eine Nut, welche der Greifkontur des ersten Greifelements gegenüberliegt.

Der Sensor 50 überwacht die Bewegung des zweiten Greifelementes 32. Im Ausführungsbeispiel ist hierbei eine Sensorstrecke 51 vorgesehen, welche die Position des mit dem zweiten Greifelement 32 verbundenen Sensorarms 32 entlang der Sensorstrecke bestimmt.

Über den Sensor kann ermittelt werden, ob tatsächlich ein Bauteil gegriffen wurde. Weiterhin kann bei unterschiedlichen Bauteilen und insbesondere Bauteilen mit unterschiedlicher Dicke anhand der Position des zweiten Greifelementes nach dem Greifen des Bauteils zwischen den Bauteilen unterschieden werden und das jeweils gegriffene Bauteil identifiziert werden. Die Steuerung weist bevorzugt entsprechende Funktionen auf, welche diese Ermittlung und/oder Identifizierung durchführen.

In einer nicht gezeigten alternativen Ausgestaltung könnte auch nur ein Aktor zum Bewegen eines oder beider Greifelemente eingesetzt werden. Weiterhin könnten die beiden Greifelemente so am Greifer angeordnet sein, dass diese linear aufeinander zu bewegt werden. In diesem Fall wird die Handlingeinheit genutzt, um den unteren Greiffinger unter die Greifkontur des Bauteils zu verfahren.

Die im Ausführungsbeispiel gezeigte Ausgestaltung mit zwei Aktoren vereinfacht dagegen die Ansteuerung der Handlingeinheit und das Greifen von unterschiedlich dicken Konturen.

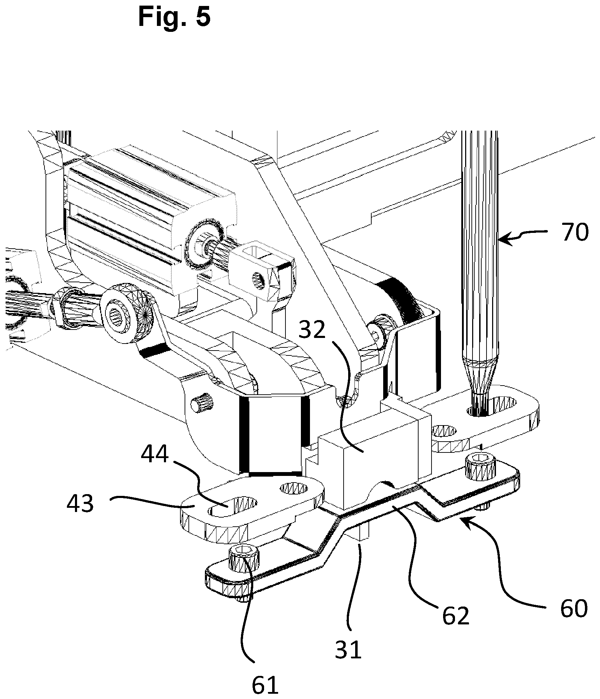

Ein Beispiel für ein Bauteil 60, welches mit dem erfindungsgemäßen Modul gegriffen und demontiert werden kann, ist in Figur 5 gezeigt. Das Bauteil 60 umfasst eine Mehrzahl von Schrauben 61. Die Öffnungen 44 in den Maskenelementen 43 sind so angeordnet, dass sie bei gegriffenem Bauteil oberhalb der Schraubenköpfe der Schrauben 61 angeordnet sind. Hierdurch kann ein Schrauberbit 70, welches in Figur 5 schematisch dargestellt ist, durch die Öffnung hindurch die jeweilige Schraube erreichen.

Die Masken sind mit einem solchen Abstand oberhalb der Schraubenmuttern angeordnet, dass ein Lösen der Verschraubung und eine hierbei eventuell gegebene Bewegung der Schrauben entlang ihrer Längsachse möglich ist, die Schrauben aber in den Schraublöchern der Bauteils gehalten werden, wenn die Verschraubung gelöst wurde.

Das Bauteil 60 weist eine Kontur 62 auf, welche von dem Greifer gegriffen wird. Insbesondere verschwenkt das erste Greifelement 31 unter die Kontur 62. Durch ein Absenken des zweiten Greifelementes 32 wird die Kontur 62 sodann zwischen dem ersten und dem zweiten Greifelement gegriffen. Das zweite Greifelement sorgt zudem während dem Lösen der Verschraubung dazu, dass das Bauteil niedergehalten wird.

Bei dem Bauteil 60 kann es sich beispielsweise um einen elektrischen Verbinder zwischen zwei Batteriemodulen handeln. Dieser kann beispielsweise aus einem Drahtgeflecht bestehen, durch welches die Schrauben 61 hindurchgehen. Der mittlere Bereich 62 des Verbinders dient als Kontur, an welcher das Bauteil 60 gegriffen wird.

Bei den Aktoren zum Bewegen der Maske sowie der Greifelemente kann es sich beispielsweise um Zylinder handeln, insbesondere um Pneumatik-, Elektrik- und/oder Hydraulikzylinder.

Ein Ausführungsbeispiel für ein Verfahren, welches mit Hilfe des erfindungsgemäßen Moduls beziehungsweise einer Vorrichtung, welche die Handhabungseinheit und das Modul umfasst, durchgeführt werden kann, wird im Folgenden näher beschrieben. Insbesondere wird das Verfahren automatisiert durch eine Steuerung der Vorrichtung durchgeführt.

Beispielsweise kann das Verfahren automatisiert im Rahmen der Demontage von Batterieeinheiten durchgeführt werden.

Die einzelnen Schritte des Verfahren stellen sich wie folgt dar:
Zum Start befindet sich die Maske 40 zum Niederhalten der Schrauben in der Halteposition, welche im Ausführungsbeispiel einer horizontalen Lage der Maskenelemente 43 entspricht. Das erste Greifelement 31 ist in die Freigangposition zurückgefahren, das zweite Greifelement ist ebenfalls zurückgezogen.

Nun wird der Greifer von der Handling-Einheit auf eine Arbeitsposition gefahren, in welcher die Maske oberhalb der Schrauben angeordnet ist und das zweite Greifelement oberhalb der zu greifenden Kontur des Bauelementes.

In einer alternativen Ausgestaltung könnte die Maske auch erst in der Arbeitsposition des Modules in die Halteposition verfahren werden.

Ist das Modul in der Arbeitsposition am Bauteil, wird das erste Greifelement in seine Halteposition verfahren. Insbesondere greift es hierdurch unter die Kontur 62 des Bauteils 60, so dass die Greifkontur des ersten Greifelementes nunmehr der Greifkontur des zweiten Greifelementes 32 gegenüberliegt.

Nunmehr wird das zweite Greifelement 32 heruntergefahren, bis dieses auf der Kontur 62 des Bauteils 60 aufliegt, so dass das Bauteil zwischen den Greifelementen gehalten ist.

Hierbei kann über den Sensor 50 eine Positionserkennung erfolgen. Durch Auswertung der Position erhält die Steuerung eine Rückmeldung, ob ein Bauteil vorhanden ist und richtig gegriffen wurde. Weiterhin kann in der Steuerung anhand des Hubs eine Typerkennung des Bauteils erfolgen. Weiterhin ist eine Funktion "Teil in Greifer" integriert. Insbesondere wird dabei der weitere Vorgang abgebrochen, wenn kein Bauteil im Greifer erkannt wurde.

Während das Modul über die Handling-Einheit auf Position gehalten wird, werden nunmehr die Schrauben durch die Masken hindurch von einer Schraubeinheit gelöst. Insbesondere geht hierbei ein Bit 70 der Schraubeinheit durch die Öffnungen 44 der Maskenelemente 43 hindurch zu der jeweiligen Schraube und löst diese.

Die Schraubeinheit kann an einer separaten Handling-Einheit, insbesondere an einem separaten Roboter, angeordnet sein, und, soweit mehrere Schrauben vorhanden sind, nacheinander die einzelnen Schrauben lösen. In einer alternativen Ausgestaltung könnte die Schraubeinheit auch an dem Modul angeordnet sein und gegenüber der Verbindungseinheit 20 verfahrbar sein, um in die jeweilige Schraubposition verfahren zu werden.

Durch die Maske 40 verbleiben die Schrauben bei einem Ausfahren des Bits 70 aus der Maske im Bauteil. Möglicherweise am Bit hängenbleibende Schrauben werden an der Maske sicher abgestreift und verbleiben ebenfalls auf der gelösten Schraubposition. Die Schrauben werden durch die Maske daher verliersicher am Bauteil 60 gehalten.

Nachdem die Schraubereinheit die Schrauben gelöst hat, wird die Schraubereinheit weggefahren.

Das Bauteil ist durch das Lösen der Schrauben nunmehr von der Baugruppe, an welcher es befestigt war, gelöst. Insbesondere kann das Bauteil dabei von den Batteriemodulen, an welchen es angeschraubt war, gelöst sein.

Das Modul wird nun über die Handling-Einheit zu einer ersten Abwurfposition gefahren und nimmt hierbei das am Greifer gegriffene Bauteil und die durch die Maske gesicherten Schrauben mit.

In der ersten Abwurfposition wird die Maske über den schwenkbaren Maskenhalter aus der (horizontalen) Halteposition in eine (vertikale) Freigabeposition geschwenkt. Die Schrauben 61 sind damit freigegeben.

Das Modul wird nunmehr durch die Handling-Einheit umgedreht, so dass das am Greifer gehaltene Bauteil ebenfalls umgedreht wird. Die Schrauben fallen nun aus dem Bauteil in eine hierfür vorgesehene Abwurfbox. Zum Abwerfen der Schrauben kann auch ein Abstreifen oder Kippen eingesetzt werden.

Daraufhin wird das Modul über die Handling-Einheit zu einer zweiten Abwurfposition gefahren. Das zweite Greifelement 32 wird hochgefahren und das erste Greifelement wird in die Freigabeposition zurückgefahren, das Bauteil somit freigegeben. Das Bauteil fällt hierdurch in eine dafür vorgesehene Abwurfbox.

Bevorzugt wurde das Modul dabei, bevor der Griff des Greifers gelöst wird, wieder in seine ursprüngliche Position zurückgedreht, so dass das Bauteil nach unten abgeworfen werden kann.

Nunmehr wird die Maske zum Niederhalten der Schrauben wieder in die horizontale Halteposition geschwenkt.

Die Aktoren am Modul befinden sich nun an ihrer Startposition und der Prozess beginnt mit einem neuen Bauteil.

Das erfindungsgemäße Modul sowie das durch dieses durchgeführte Verfahren erlauben eine sortenreine Trennung zwischen dem Bauteil und den Schrauben. Eine solche sortenreine Trennung von Bauteilen und Werkstoffen ist ein wichtiger Aspekt bei der Abfallwirtschaft und somit auch bei der Batteriedemontage sowie dem nachfolgenden Recycling.

Das erfindungsgemäße Modul sowie das erfindungsgemäße Verfahren können jedoch nicht nur bei der Batteriedemontage, sondern auch bei der Demontage beliebiger anderer verschraubter Bauteile eingesetzt werden.

## Patentansprüche

1. Modul zum automatisierten Greifen eines mit mindestens einer Schraube verschraubten Bauteils, insbesondere bei der Demontage einer Batterieeinheit, umfassend:
- eine Schnittstelle zur Montage des Moduls an einer Handlingeinheit, insbesondere einem Roboter, und
- einen Greifer zum Greifen des Bauteils,
**dadurch gekennzeichnet,**
**dass** das Modul eine Maske zur Sicherung der mindestens einen Schraube während und/oder nach dem Lösen der Verschraubung umfasst, wobei die Maske bevorzugt eine Aussparung umfasst, durch welche hindurch die Schraube mittels eines Schraubers erreichbar ist, um die Verschraubung zu lösen.

2. Modul nach Anspruch 1, wobei die Maske aus einer Freigabestellung, in welcher die Schraube von dem Bauteil entfernt werden kann, in eine Haltestellung, in welcher die Maske die Schraube am Bauteil sichert, bewegbar ist, wobei das Modul bevorzugt einen Aktor zum Bewegen der Maske umfasst.

3. Modul nach Anspruch 2, wobei die Maske um eine Schwenkachse verschwenkbar und/oder linear verfahrbar am Modul angeordnet ist und durch ein Verschwenken um die Schwenkachse und/oder ein lineares Verfahren von der Freigabestellung in die Haltestellung bewegbar ist.

4. Modul nach einem der vorangegangenen Ansprüche, wobei der Greifer zwei Greifelemente umfasst, zwischen welchen das Bauteil gegriffen werden kann, wobei die beiden Greifelemente bevorzugt beide beweglich am Modul angeordnet sind.

5. Modul nach Anspruch 4, wobei die beiden Greifelemente durch separate Aktoren bewegbar sind und/oder wobei die beiden Greifelemente unterschiedliche Bewegungsachsen aufweisen.

6. Modul nach einem der Ansprüche 4 oder 5, wobei ein erstes Greifelement mittels eines ersten Greifaktors des Moduls aus einer Greifposition, in welcher eine Greifkontur des ersten Greifelementes einer Greifkontur des zweiten Greifelementes gegenüberliegt, um eine zwischen den beiden Greifelementen angeordnete Kontur des Bauteils greifen zu können, in eine Freigabeposition bewegbar ist, in welcher sich die Greifkonturen nicht mehr gegenüber liegen, und/oder wobei das erste Greifelement aus einer Greifposition in eine Freigabeposition verschwenkbar ist, und/oder wobei es sich bei dem ersten Greifelement um einen Greiffinger handelt.

7. Modul nach einem der Ansprüche 4 bis 6, wobei eine Greifkontur des zweiten Greifelements mittels eines zweiten Greifaktors des Moduls in Richtung auf eine Greifkontur des ersten Greifelementes verfahrbar ist, um eine dazwischen angeordnete Kontur des Moduls zu greifen, wobei das zweite Greifelement bevorzugt linear verfahrbar ist oder mit einem Schwenkradius verschwenkbar ist, welcher mindestens doppelt so groß ist wie ein Schwenkradius des ersten Greifelementes.

8. Modul nach einem der vorangegangenen Ansprüche, wobei der Greifer einen Sensor umfasst, mit welchem die Greifbewegung überwacht werden kann, wobei bevorzugt eine Steuerung vorgesehen ist, welche anhand der Überwachung der Greifbewegung erkennt, ob ein Bauteil gegriffen wurde und/oder welche Art von Bauteil gegriffen wurde, wobei der Sensor bevorzugt den Verfahrweg mindestens eines Greifelements des Greifers überwacht.

9. Modul nach einem der vorangegangenen Ansprüche, wobei die Maske zwei Maskenelemente umfasst, welche auf beiden Seiten des Greifers angeordnet sind, wobei die Maskenelemente bevorzugt an einem schwenkbaren Maskenarm angeordnet sind.

10. System zum automatisierten Greifen eines mit mindestens einer Schraube verschraubten Bauteils, insbesondere bei der Demontage einer Batterieeinheit, mit einem Modul nach einem der vorangegangenen Ansprüche, einer Handlingeinheit, insbesondere einem Roboter, zum Bewegen des Moduls und einer Steuerung zur Ansteuerung des Roboters und des Moduls.

11. System nach Anspruch 10, wobei das System einen Schrauber zum Lösen der mindestens einen Schraube umfasst, während diese von der Maske niedergehalten wird, wobei der Schrauber bevorzugt an einem weiteren Roboter angeordnet ist.

12. System nach Anspruch 10 oder 11, wobei die Steuerung so ausgestaltet ist, dass nach einem Lösen der mindestens einen Schraube das Bauteil in eine erste Abwurfposition verfahren wird, wobei bei dem Verfahren die mindestens eine Schraube mittels der Maske am Bauteil gesichert ist, und dass die Maske in der Abwurfposition in eine Freigabestellung bewegt wird, in welcher sie die mindestens eine Schraube freigibt, wobei die mindestens eine Schraube bevorzugt durch ein mittels des Roboters erfolgendes Bewegen, beispielsweise Drehen und/oder Kippen des Moduls abgeworfen wird, insbesondere in eine erste Abwurfbox.

13. System nach einem der Ansprüche 10 bis 12, wobei die Steuerung so ausgestaltet ist, dass das Bauteil in eine zweite Abwurfposition verfahren wird, in welcher der Greifer das Bauteil freigibt, so dass dieses abgeworfen wird, insbesondere in eine zweite Abwurfbox, wobei das Abwerfen des Bauteils bevorzugt erfolgt, nachdem die Schrauben abgeworfen wurden, und/oder wobei bevorzugt ein erstes Greifelement des Greifers so verfahrbar und insbesondere zurückschwenkbar ist, dass das Bauteil ohne eine Bewegung des Moduls durch den Roboter abgeworfen wird.

14. System nach einem der Ansprüche 10 bis 13, wobei die Steuerung so ausgestaltet ist, dass zum Greifen des Bauteils das Modul mittels des Roboters in eine Arbeitsposition am Bauteil verfahren wird,
wobei in der Arbeitsposition des Moduls ein erstes Greifelement des Greifers aus einer Freigabeposition in eine Greifposition verfahren wird, in welcher eine Greifkontur des ersten Greifelementes einer Greifkontur des zweiten Greifelementes gegenüberliegt, um eine zwischen den beiden Greifelementen angeordnete Kontur des Bauteils greifen zu können, und/oder
wobei in der Arbeitsposition des Moduls die Maske aus einer Freigabestellung in eine Haltestellung bewegt wird.

15. Verfahren zum automatisierten Greifen eines mit mindestens einer Schraube verschraubten Bauteils, insbesondere bei der Demontage einer Batterieeinheit, mit einem Modul nach einem der Ansprüche 1 bis 9 und/oder einem System nach einem der Ansprüche 10 bis 14, wobei die mindestens eine Schraube mittels eines Schraubers gelöst wird, welcher durch die Maske hindurch an der Schraube angreift, während diese durch die Maske am Bauteil gesichert ist.
